# EUROPEAN PATENT APPLICATION

(11) **EP 4 567 245 A1**
(43) Date of publication of application: **11.06.2025**
(21) Application number: 23214348.7
(22) Date of filing: 05.12.2023
(51) Int. Cl.: E05F 15/689

(54) **WINDOW PANE ACTUATION MECHANISM AND VEHICLE HAVING SUCH A MECHANISM**

(71) Applicant: VOLVO TRUCK CORPORATION, 405 08 Göteborg (SE)
(72) Inventor: THANGAMARIAPPAN, Balaganesh, SATTUR, 626203, TAMIL NADU (IN)
(74) Representative: Germain Maureau

(57) **Abstract**

A motorized window pane actuation mechanism (50) for displacing a mobile window pane (32), comprising:
- a static tubular pillar (56) extending along a main axis (A52) on a side of a first pane zone (321);
- a rotating output tube (60) mounted coaxially around the static tubular pillar (56);
- a rotating central shaft (62) mounted coaxially inside the static tubular pillar (56);
- a rotary motor (64) mounted coaxially inside the static tubular pillar (56) and around the rotating central shaft (62) to cause the rotation of the rotating central shaft (62) with respect to the static tubular pillar (56);
- a connector (56) for transmitting a rotary motion of the rotating central shaft (62) to the rotating output tube (60);
- a rotary-to-linear motion converter (68) which is driven by the rotating output tube (60) and drives the displacement of the mobile window pane (32).

## Description

### TECHNICAL FIELD

The disclosure relates generally to mechanisms for displacing a mobile window pane, for example a sliding window pane. In particular aspects, the disclosure relates to a motorized window pane actuation mechanism for displacing a mobile window pane with respect to a window holding structure. The disclosure can be applied to heavy-duty vehicles, such as trucks, buses, and construction equipment, among other vehicle types. In such a case, the window holding structure may be a door of the vehicle. Although the disclosure may be described with respect to a particular vehicle, the disclosure is not restricted to any particular vehicle.

### BACKGROUND

Actuation mechanisms for displacing a sliding window pane are usually quite cumbersome. When the window is that of a door of a vehicle, the actuation mechanism is usually hidden in a lower portion of the door, below a window opening located in an upper portion of the door. Usually, the actuation mechanism extends over a substantial portion of the lower portion of the door. In some instances, it can useful to have a more compact mechanism. One of those instances can be when it is desired to provide a vehicle door with a transparent panel in its lower portion, below an upper window, with for example the aim to increase the visibility of vehicle occupant towards the exterior of the vehicle.

### SUMMARY

According to a first aspect of the disclosure, it is disclosed a motorized window pane actuation mechanism for displacing a mobile window pane with respect to a window holding structure between a first position and a second position along a window opening displacement. The mobile window pane occupies, with respect to said window holding structure, a first pane zone when it is in the first position and a second pane zone when it is in the second position.

The window pane actuation mechanism comprises:
- a static tubular pillar extending along a main axis parallel to the window opening displacement and on a side of the first pane zone ;
- a rotating output tube mounted coaxially around the static tubular pillar;
- a rotating central shaft mounted coaxially inside the static tubular pillar;
- a rotary motor mounted coaxially inside the static tubular pillar and around the rotating central shaft to cause the rotation of the rotating central shaft with respect to the static tubular pillar;
- a connector for transmitting a rotary motion of the rotating central shaft to the rotating output tube;
- a rotary-to-linear motion converter which is driven by the rotating output tube and drives the displacement of the mobile window pane along the window opening displacement.

The first aspect of the disclosure may seek to provide a motorized window pane actuation mechanism which extends on a side of the first pane zone. A technical benefit may include freeing up the space corresponding to the first pane zone. An advantage can reside in the possible to give more freedom to design the portion of the vehicle which holds the first pane zone. Such freedom can be put to advantage to use the area in the first pane zone to locate other devices. A further advantage can be achieved where the first pane zone is at least partially transparent as the motorized window pane actuation mechanism does not obstruct the view through the first pane zone.

Optionally in some examples, including in at least one preferred example, the rotating output tube may extends along at least a portion of the static tubular pillar and extends alongside the first pane zone. A technical benefit may include a compact concentric solution, further allowing the space to be optimized.

Optionally in some examples, including in at least one preferred example, the connector may be an iso-speed connector which connects the rotating central shaft to the rotating output tube. A technical benefit may include a simple and reliable construction where rotating central shaft and the rotating output tube rotate at the same speed.

Optionally in some examples, including in at least one preferred example, the connector is a rigid connector which rigidly connects the rotating central shaft to the rotating output tube. A technical benefit may include a cost effective construction.

Optionally in some examples, including in at least one preferred example, the connector may comprise a gear train which connects the rotating central shaft to the rotating output tube with a speed reduction or multiplication ratio. This can provide more freedom to adapt the motor to the torque requirements for driving the mechanism. A technical benefit may include that of a smaller and / cheaper / and or more compact motor. It may also provide for a better and/or easier control of the movement of the window, through better and/or easier control of the motor.

Optionally in some examples, including in at least one preferred example, the connector may located proximate to one extremity of the static tubular pillar. A technical benefit may include a simpler design and an easier assembly.

Optionally in some examples, including in at least one preferred example, the rotary-to-linear motion converter may comprise a helical thread on an outer cylindrical surface of the rotating output tube. A technical benefit may include a very robust and reliable movement converter. Moreover, being formed on an outer cylindrical surface of the rotating output tube, of a relatively large diameter, patristic rotations around other axis than the main axis may be prevented.

Optionally in some examples, including in at least one preferred example, the helical thread on the outer cylindrical surface of the rotating output tube may have a length along the main axis which is superior or equal to a travel distance of the window pane between its first and second positions. A technical benefit may include the possibility to have direct drive between the rotating output tube and the window pane, without necessitating any supplemental movement amplifying mechanism.

Optionally in some examples, including in at least one preferred example, the rotary-to-linear motion converter may comprise a nut which is screwed on the helical thread and which is prevented from rotating around the main axis but free to translate along the main axis, said nut being connected to a window pane carrier which carries the window pane between its first and second positions. A technical benefit of such a screw-nut mechanism may include technical simplicity and low cost. A further benefit may include a high reliability. A further benefit may include an irreversibility of the movement flow, preventing any effort applied to the window pane being transferred back to the motor.

Optionally in some examples, including in at least one preferred example, the nut may have a radial extension which is received in a guiding slot that is fixed with respect to the window holding structure and which extends parallel to the main axis, and wherein the radial extension prevents rotation of the nut around the main axis. A technical benefit may include avoiding the transfer of any parasitic torque to the window pane. The combination of the nut, the radial extension and of the slot may provide a proper guiding to the window pane, possibly without the need for, or with minimal need for any further window pane guiding mechanism.

Optionally in some examples, including in at least one preferred example, the guiding slot is a slot in a cylindrical housing of the window pane actuation mechanism. A technical benefit may include achieving at least two function with a same component, combining the protective effect of the housing to the guiding effect of the slot, at reduced cost and increased compactness.

Optionally in some examples, including in at least one preferred example, the rotary motor comprises an electric motor which has a stator connected to an internal surface of the static tubular pillar, and a rotor mounted on the rotating central shaft. A technical benefit may include facility of implementation, and compactness.

Optionally in some examples, including in at least one preferred example, the connector may be guided in rotation with respect to the window holding structure via a bearing. A technical benefit may include better guiding and/or less friction.

Optionally in some examples, including in at least one preferred example, the static tubular pillar may be statically affixed by a mounting extremity to the window holding structure. The static tubular pillar may have a free end extremity, opposite of the mounting extremity along the main axis, and the connector for transmitting a rotary motion of the rotating central shaft to the rotating output tube may located at the free end extremity of the static tubular pillar. A technical benefit may include an easier assembly on the structure, with a simplified and lower cost design.

Optionally in some examples, including in at least one preferred example, the first position of the mobile window pane is an opened window position, and the second position of the mobile window pane is a closed window position. A technical benefit may include having the mechanism on the side of the first pane zone which corresponds then to the window open position, leaving the zone around the second pane zone un-encumbered by the window pane actuation mechanism.

Optionally in some examples, including in at least one preferred example, the window holding structure may comprise, facing the first pane zone, a transparent panel. A technical benefit may include that the vision through the transparent is not obstructed by the window pane actuation mechanism.

Optionally in some examples, including in at least one preferred example, the window holding structure may be a door of an automotive vehicle. A technical benefit of having such a window pane actuation mechanism for actuating the door window is that its compactness may allow maximizing the window surface on the door.

According to a second aspect of the disclosure, it is disclosed a vehicle comprising the motorized window pane actuation mechanism having any of the preceding features.

According to a third aspect of the disclosure, it is disclosed a vehicle comprising a door, wherein the door has a lower portion, an upper portion, a window opening in the upper portion, a mobile window pane and a window pane actuation mechanism for displacing the mobile window pane with respect to the door between a window open position and a window closed position along a window opening displacement. The mobile window pane occupies, with respect to the door, a pane retraction zone in the lower portion of the door when in the opened window position, and a second pane zone corresponding to the window opening when in the closed window position. The lower portion of the door comprises, facing the pane retraction zone, a transparent panel. The window pane actuation mechanism comprises:
- a static tubular pillar extending along a main axis parallel to the window opening displacement and on a side of the pane retraction zone;
- a rotating output tube mounted coaxially around the static tubular pillar, extending alongside the pane retraction zone and outside of a perimeter of the transparent panel;
- a rotating central shaft mounted coaxially inside the static tubular pillar;
- a rotary motor mounted coaxially inside the static tubular pillar and around the rotating central shaft to cause the rotation of the rotating central shaft with respect to static tubular pillar;
- a connector located proximate to an upper extremity of the static tubular pillar for transmitting a rotary motion of the rotating central shaft to the rotating output tube (60);
- a rotary-to-linear motion converter which is driven by the rotating output tube and drives the displacement of the mobile window pane along the window opening displacement.

In such a vehicle, the rotary-to-linear motion converter comprises a helical thread on an outer cylindrical surface of the rotating output tube, the helical thread having a length along the main axis which is superior or equal to a travel distance of the window pane between its opened window and closed window positions, and the rotary-to-linear motion converter comprises a nut which is screwed on the helical thread and which is prevented from rotating around the main axis but free to translate along the main axis, said nut being connected to a window pane carrier which carries the window pane between its window open and window closed positions.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic view of an exemplary vehicle which may be equipped with a motorized window pane actuation mechanism according to an example.
**FIG. 2A, FIG. 2B,** and **FIG. 2C****,** are three schematic perspective views of an exemplary vehicle door having a window and which may be equipped with a motorized window pane actuation mechanism according to an example, the door window being illustrated respectively in a first window position which is a window open position, in an intermediate window position, and in a second window position which is a window closed position.
**FIG. 3** is a schematic axial section view of an exemplary motorized window pane actuation mechanism according to an example.
**FIG. 4** is a schematic view of a transverse section along line 4-4 of **FIG. 3** of the exemplary motorized window pane actuation mechanism of **FIG. 3****.**
**FIG. 5** is a schematic axial section view of another exemplary motorized window pane actuation mechanism.

### DETAILED DESCRIPTION

The detailed description set forth below provides information and examples of the disclosed technology with sufficient detail to enable those skilled in the art to practice the disclosure.

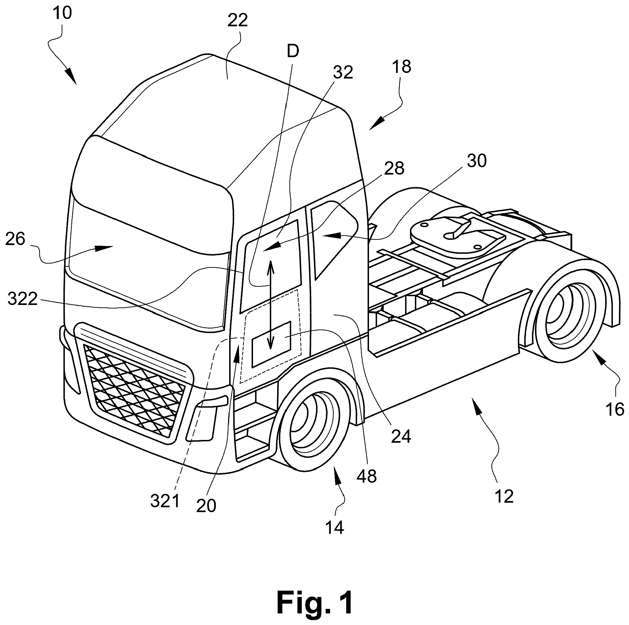

FIG. 1 is an exemplary automotive vehicle 10 that may be equipped with a motorized window pane actuation mechanism as described in detail below. The vehicle may be a heavy-duty truck 10. More particularly, the vehicle may be a tractor 10 of a semi-trailer truck, thus designed to be coupled to a semi-trailer (not shown). However, the vehicle could be any other type of truck, and, more generally, any other type of heavy-duty vehicle, such as buses and construction equipment (excavators, loaders, backhoes, backhoe-loaders, graders, dump-trucks, bulldozers, asphalt-pavers, compactors, tele-handlers, etc...). The tractor may typically comprise a chassis 12 having at least a front axle 14 and at least a rear axle 16, and a passenger cabin 18 for accommodating a driver of the vehicle. The passenger cabin may of course accommodate one or several passengers other than the driver.

The vehicle in this example comprises at least one door 20. In this example, the door 20 gives access to the passenger cabin 18 of the vehicle 10 and thus belongs to the passenger cabin 18. The door 20 is for example a lateral door, such as a driver-side door or a passenger-side door. However, in other types of vehicles, the door could be a door to a cargo area of the vehicle. The door is a mobile structure of the passenger cabin 18, which may move relative to other parts of the passenger cabin. The passenger cabin 18 comprises fixed panels, such as for example a roof panel 22 or a rear lateral panel 24.

The vehicle 10 has several windows, including for example a windscreen 26, a door window 28 pertaining to the door 20, and/or a rear lateral window 30 mounted on the rear lateral panel 24. Reference will now be made more particularly to the door window 28. However, a motorized window pane actuation mechanism could be implemented in relation to any other window of the vehicle having a mobile window pane.

The window, more particularly the door window 28, has a mobile window pane 32 which may be displaced with respect to a window holding structure. The window pane 32 is preferably transparent. The window pane 32 is for example made of glass, or of a transparent polymer material, such as acrylic (poly(methyl methacrylate)), Lexan^{™} (polycarbonate), or PETG (glycol modified polyethylene terephthalate). In the case of a door window 28, the window holding structure is a part of the door 20 and can be the door 20 itself. In the case of a window on fixed panel of the vehicle, the window holding structure is the fixed panel. The window pane 32 can be displaced between a first position 311 and a second position 312 along a window opening displacement. The displacement of the mobile window pane 32 is preferably parallel to the window pane itself, including a strictly parallel displacement and a substantially parallel displacement with respect to the general plane of the window pane 32. In such a case, the mobile window pane 32 can be called a sliding window pane. A displacement axis D is defined as being the direction joining a given point of the window pane 32 in the first position, for example the center point of the window pane 32, to the position of the same given point of the window pane 32 in the second position. The actual displacement of the window pane between the first position and the second position may be a translation along the displacement axis D, or a more complex movement including a 2-dimensional displacement, for example in the general plane of window pane 32, or even a 3-dimensional displacement. The general plane of the window pane 32 can be considered to be the geometrical plane defined by the two perpendicular biggest dimensions of the window pane 32.

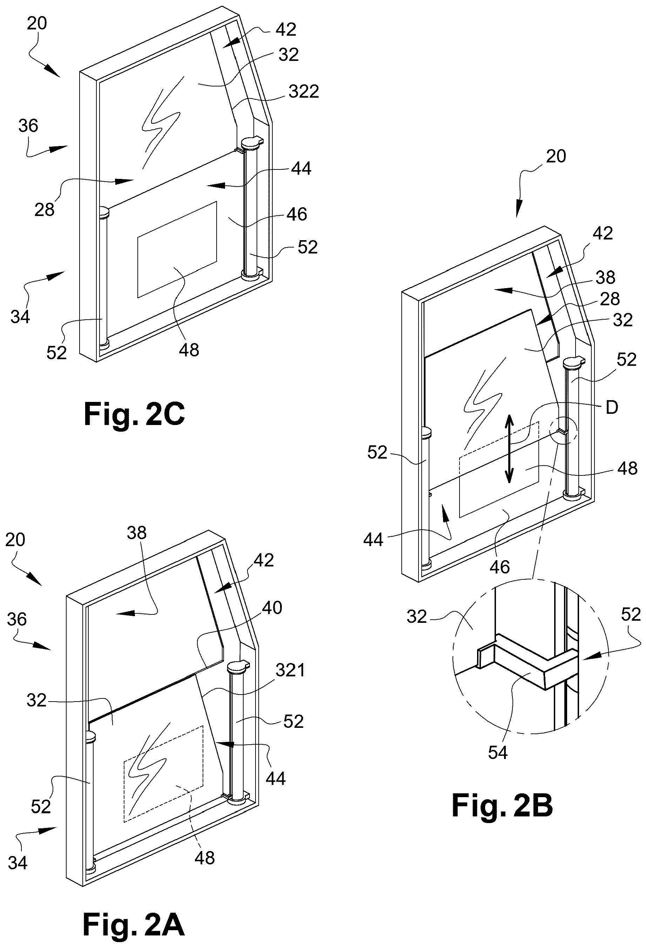

Reference will now be made to FIGS. 2A, 2B, and 2C, which are three schematic perspective views of an interior side of the door 20, with the door window 28 being illustrated with its mobile window pane 32 respectively in the first window position 321 which is a window open position, in an intermediate window position, and in a second window position 322 which is a window closed position. For the sake of facilitating the understanding of the disclosure, the door 20 and the door window 28 are considered to be oriented in a vertical plane, with the door window being in an upper portion of the door. However, the orientation of the door 20 and/or of the window 28, and/or the location of the window 28 with respect to the door 20 should not be considered as a limitation of the broader scope of the invention. The door 20 can be considered to have a general plane which can be defined as the geometrical plane defined by its two perpendicular biggest dimensions. When the general plane of the door is considered to be vertical, this general plane defines a crosswise direction perpendicular to the vertical direction in the general plane of the door 20. It can be noted that, in FIG. 1, when the door 20 is closed, the crosswise direction substantially corresponds to a longitudinal direction of the vehicle 10.

The door 20 comprises a lower portion 34 and an upper portion 36, with a window opening 38 in the upper portion 36. A demarcation between the lower portion 34 and the upper portion 36 can be considered to be at the level of a lower edge 40 of the window opening 38. The upper portion 36 of the door may comprise a frame 42 for the window opening 38. The frame 42 may extend along the entire contour of the window opening 38 in the upper portion 36, as in the shown in the example. However, the frame 42 may extend along a part of the contour of the window opening 38 in the upper portion 36, or the window opening 38, in which case the upper portion is virtual, consisting only of the window opening itself. The lower portion 34 of the door 20 may typically comprise a fixed lower door external panel 44. The lower door external panel 44 may be opaque or translucent, or may be transparent. In the example, the lower door external panel comprises a peripheral opaque portion 46 and a transparent panel portion 48, which is for example located centrally in the lower door panel 44. The transparent panel portion 48 is for example made of glass, or of a transparent polymer material, such as acrylic (poly(methyl methacrylate)), Lexan^{™} (polycarbonate), or PETG (glycol modified polyethylene terephthalate).

The window 28 comprises a motorized window pane actuation mechanism 50 for displacing the mobile window pane 32 with respect to the window holding structure, which is here constituted by the door 20, between the window open position shown in FIG. 2A, and the window closed position shown in FIG. 2C, through the window intermediate position shown in Figure 2B. The displacement of the mobile window pane 32 with respect to the window holding structure is along a window opening displacement, which is, in this example, a translation along the vertical direction D, in the general plane of the door 20.

In the opened window position of the mobile window pane 32, shown in FIG. 2A, the mobile window pane 32 occupies, with respect to window holding structure, i.e. in the example with respect to the door 20, a first pane zone 321, which can be called pane retraction zone, in the lower portion 34 of the door 20.

In the shown example, the pane retraction zone 322 faces the transparent panel portion 48 of the lower portion 34 of the door 20, with the meaning that, in the opened window position of the mobile window pane 32, at least a portion of the mobile window pane 32 is superposed to at least a portion of the transparent panel portion 48 of the lower portion 34 of the door comprises 20, when viewed along a direction perpendicular to the general plane of the door 20.

In the closed window position of the mobile window pane 32, shown in FIG. 2C, the mobile window pane 32 occupies, with respect to window holding structure, i.e. in the example with respect to the door 20 in the shown example, a second pane zone 322, which, in this example, is coincident with the window opening 38.

The motorized window pane actuation mechanism 50 comprises at least one motorized actuator 52 located in the lower door portion 34. In the shown embodiment, the motorized window pane actuation mechanism 50 comprises two motorized actuators 52.

In the shown example, each motorized actuator 52 extends parallel to the window opening displacement axis D, which, in this example is a translation along a vertical direction. Each motorized actuator 52 extends on a side of the pane retraction zone 321 with respect to the crosswise direction of the door 20, with one motorized actuator 52 on one side and the other motorized actuator 52 on the other side of the pane retraction zone 321 in the crosswise direction of the door 20.

A given motorized actuator 52 can be located so as to be at least partly facing the pane retraction zone 321 on a side portion thereof, i.e. at least partly inside of the perimeter of the pane retraction zone 321 when viewed along a direction perpendicular to the general plane of the door 20. In such a case, the motorized actuator 52 overlaps at least partly the pane retraction zone 321, on a side portion thereof. Preferably, the side portion of the pane retraction zone 321 extends, from the corresponding side edge of the pane retraction zone 321, over less than 20 percent of the total width of the window pane along a direction perpendicular to the window opening displacement axis D. In such a case, the motorized actuator 52 is offset from on the general plane of the window pane 32 along a direction perpendicular to the general plane of the window pane 32. With two opposite motorized actuators 52 on each side of the pane retraction zone 321, a central portion of the pane retraction zone 321, which has a width at least 60 percent of the of the total width of the window pane, along a direction perpendicular to the window opening displacement axis D, is clear from any presence of any of both motorized actuators 52 when viewed along a direction perpendicular to the general plane of the door 20.

Alternatively, a given motorized actuator 52 can be located so as to be crosswise offset from the pane retraction zone 321, i.e. outside of the perimeter of the pane retraction zone 321 when viewed along a direction perpendicular to the general plane of the door 20. In such a case, the motorized actuator 52 can be offset from the general plane of the window pane 32, along a direction perpendicular to the general plane of the window pane 32, or can be located generally coplanar with the general plane of the window pane 32. In such a case, the pane retraction zone 321 is clear from any presence of any motorized actuator 52 when viewed along a direction perpendicular to the general plane of the door 20. Thereby, as visible in FIGS. 2A to 2C, none of the motorized actuators obstructs the view through the optional transparent panel portion 48 of the lower portion 34 of the door 20, at least not through a central portion of the optional transparent panel portion 48.

Preferably, no the motorized actuator 52 overlaps with the optional transparent panel portion 48 when viewed along a direction perpendicular to the general plane of the door 20. As a consequence, no motorized actuator 52 is visible from the external side of the door, when viewed along a direction perpendicular to the general plane of the door 20.

In the shown embodiment, the motorized actuators 52 are identical and are symmetrically arranged, so that in the following description, only one of the motorized actuators 52 will be described in detail.

In the shown embodiment, the motorized actuator 52 is a linear actuator in that it has an output bracket 54 which moves linearly upon operation of the motorized actuator. The output bracket 54 drives the displacement of the mobile window pane 32 along the window opening displacement. In the shown example, the output bracket 54 of the linear motorized actuator moves parallel to the window opening displacement axis D. In the shown embodiment, the output bracket 54 of the linear motorized actuator is directly and rigidly connected to the window pane 32, and thus forms a window pane carrier, so that the movement of the output bracket 54 of the linear motorized actuator is the window opening displacement.

However, in some embodiments, a transmission mechanism may be provided between the output bracket 54 of the motorized actuator 52 and the window pane 32. Such a transmission mechanism may be configured for example allow some amount of rotation and/or of translation between the between the output bracket 54 of the motorized actuator 52 and the window pane 32, thus allowing a window opening displacement which is not strictly parallel to the movement of the output bracket 54 of the motorized actuator 52. Such transmission mechanism may comprise one or several pivoting joints and/or slide joints, and/or may comprise one or several flexible transmission members, such as an elastomeric mount.

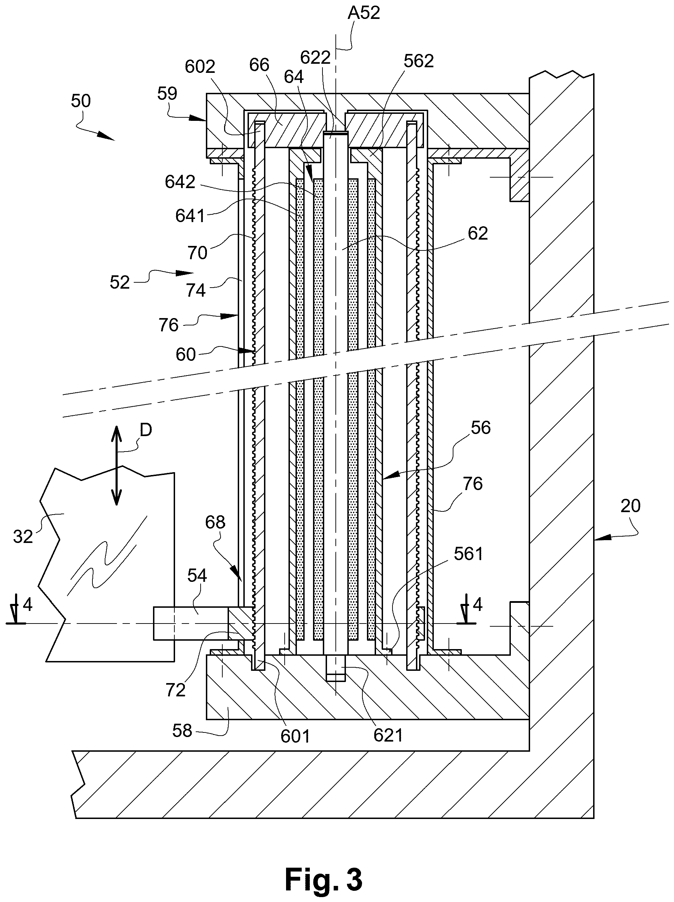

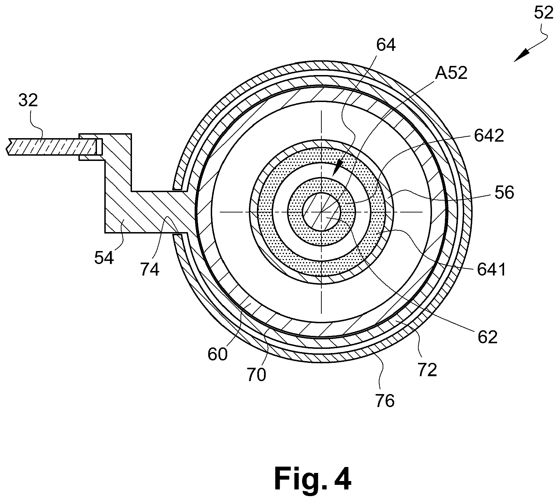

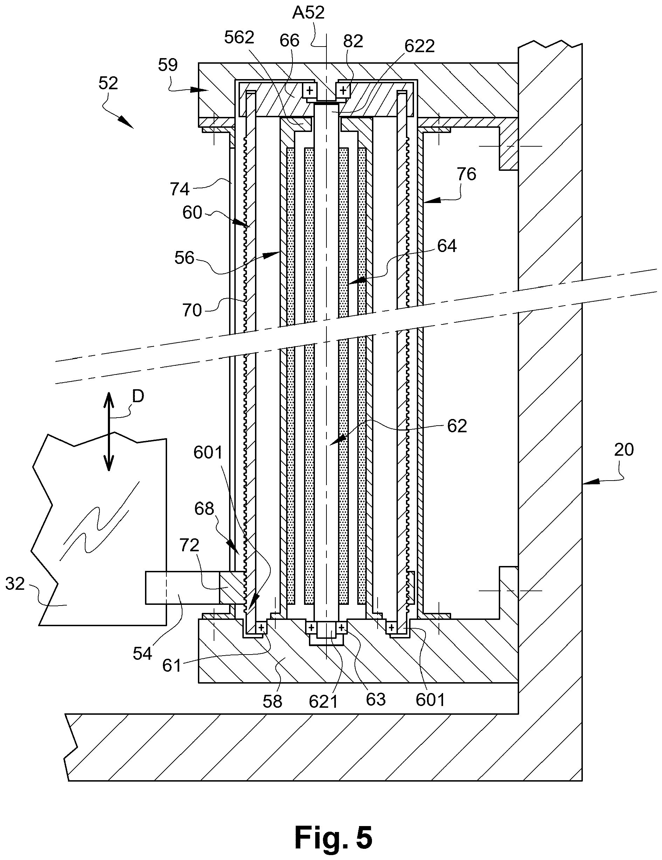

An example of a motorized actuator 52 will be now described in relation to FIGS. 3 and 4, which are schematic section views of an example motorized actuator 52, respectively through an axial plan and through a transverse plane. FIG. 5 shows a variant of an example a motorized window pane actuation mechanism 50 identical to that shown in FIG. 4, except where noted.

The motorized actuator 52 comprises a static tubular pillar 56 extending along a main axis A52. The motorized actuator 52 extends on a side of the first pane zone 321. The main axis A52 may be parallel to the window opening displacement axis D. In the context of a motorized actuator 52 for a door window as shown in the FIGS. 3 to 5, the main axis A52 extends vertically. The static tubular pillar 56 is statically affixed by a mounting extremity with respect to the window holding structure, i.e. in this example with respect to the door 20. The static tubular pillar 56 is preferably of circular cross-section around the main axis A52. However, non-circular cross-sections are foreseeable. In the example, the static tubular pillar 56 has a first axial extremity 561 and a second axial extremity 562.

Preferably, the static tubular pillar 56 is affixed to the window holding structure by at least one of its first and second axial extremities 561, 562. For example, a first bracket 58 is provided, which is affixed on the window holding structure, i.e. in this example on the door 20. The first axial extremity of the static tubular pillar 56 is affixed to the first bracket 58. For example, a second bracket 59 can provided, which is fixed on the window holding structure, i.e. in the example on the door 20, and onto which the second axial extremity of the static tubular pillar 56 may be fixed. In some embodiments, the static tubular pillar 56 is fixed on the window holding structure, i.e. in the example on the door 20, by its two axial extremities.

However, in the shown example, the static tubular pillar 56 is affixed to the window holding structure by only one of its axial extremities, in this case the first axial extremity 561, which, in the context of a door 20, is a lower extremity. Said lower extremity 561 forms, in such a case, a mounting extremity affixed onto a lower bracket 58. By contrast, the second axial extremity 562 of the tubular pillar 52 is a free end extremity, opposite of the mounting extremity 561 along the main axis A52, which is not directly connected to the window holding structure, i.e. in the example not directly connected to the door 20.

The motorized actuator 52 comprises a rotating output tube 60 mounted coaxially around the static tubular pillar 56. The rotating output tube 60 is mounted with respect to the window holding structure 20 so as to be able to rotate around the main axis A52. The rotating output tube 60 is preferably of circular cross-section around the main axis A52. In the shown example, the rotating output tube 60 has a first extremity 601, here a lower extremity, which is rotatably mounted on the lower bracket 58. For example, the lower bracket 58 may comprise a circular groove around the main axis A52, the circular groove being dimensioned to receive the lower extremity of the rotating output tube 60 and to be able to guide the rotation of the rotating output tube 60 around the main axis A52, without blocking said rotation. To that effect, a plain bearing can be provided to reduce friction forces if necessary, or, as shown in the variant of FIG. 5, a roller bearing 61can be provided to guide the rotation of the rotating output tube 60 around the main axis A52 with respect to the lower bracket 58, to further reduce friction forces if necessary. The rotating output tube 60 extends along at least a portion of the length of the static tubular pillar 56 and extends alongside the first pane zone 321. In the shown example the rotating output tube 60 is longer than the static tubular pillar 56 along the main axis A52.

The motorized actuator 52 comprises a rotating central shaft 62 mounted coaxially inside the static tubular pillar 56. The rotating central shaft 62 is mounted with respect to the window holding structure 20 so as to be able to rotate around the main axis A52. The rotating central shaft 62 is preferably of circular cross-section around the main axis A52. In the shown example, the rotating central shaft 62 has a first extremity 621, here a lower extremity, which is rotatably mounted on the lower bracket 58. For example, the lower bracket 58 may comprise a cylindrical bore around the main axis A52, the cylindrical bore being dimensioned to receive the lower extremity 621 of the rotating central shaft 62 to be able to guide the rotation of the rotating central shaft 62 around the main axis A52, without blocking said rotation. To that effect, a plain bearing can be provided to reduce friction forces if necessary, or as shown in the variant of FIG. 5, a roller bearing 63 can be provided to guide the rotation of the rotating central shaft 62 around the main axis A52 with respect to the lower bracket 58, to further reduce friction forces if necessary.

The motorized actuator 52 comprises a rotary motor 64 mounted coaxially inside the static tubular pillar 56 and around the rotating central shaft 62 to cause the rotation of the rotating central shaft 62 with respect to static tubular pillar 56, around the main axis A52. For example, the rotary motor comprises an electric motor 64 which has a stator 641 connected to an internal surface of the static tubular pillar 56, and a rotor 642 mounted on the rotating central shaft 62. The electric motor 64 may extend along the full length of the static tubular pillar 56, as shown in FIGS. 3 and 5, or along only a portion of the length of the static tubular pillar 56. When the electric motor 64 extends along the full length of the static tubular pillar 56, it may be designed with a reduced diameter for a desired output torque, or it may provide a greater torque for a given diameter.

The motorized actuator 52 comprises a connector 66 for transmitting a rotary motion of the rotating central shaft 62 to the rotating output tube 60. The connector 66 may be located proximate to one extremity of the static tubular pillar 56. In the shown example, the connector 66 for transmitting a rotary motion of the rotating central shaft 62 to the rotating output tube 60 is located at the free end extremity 562 of the static tubular pillar 56, more precisely beyond the free end extremity 562 of the static tubular pillar 56 along the main axis A52. An example of a connector will be described further below. In the shown example, the rotating central shaft 62 and the rotating output tube 60 extend beyond the free end extremity 562 of the static tubular pillar 56 along the main axis A52.

The motorized actuator 52 further comprises a rotary-to-linear motion converter 68 which is driven by the rotation of the rotating output tube 60 around the main axis A52 and which drives the displacement of the mobile window pane 32 along the window opening displacement.

An example of a rotary-to-linear motion converter 68 comprises a helical thread 70 on an outer cylindrical surface of the rotating output tube 60, as shown in the examples of FIGS. 3 to 5.

In such example, the rotating output tube 60 may additionally have a length along the main axis A52 which is superior or equal to a travel distance of the window pane 32 between its first and second positions, and the helical thread 70 on the outer cylindrical surface of the rotating output tube 60 also has a length along the main axis A52 which is superior or equal to a travel distance of the window pane between its first and second positions. In such as case, the rotary-to-linear motion converter 68 may be a leadscrew system, for example a nut and screw system where a nut is screwed on a screw and is prevented from rotating around the axis of the screw so that a rotation of the screw causes a translation of the nut along the axis of the screw, in one direction or the other depending on the direction of the screw. In the shown example, the threaded rotating output tube 60 forms the screw of a nut and screw system.

Therefore, in the example of FIGS. 3 and 4, the rotary-to-linear motion converter 68 comprises a nut 72 which is screwed on the helical thread 72 and which is prevented from rotating around the main axis A52, but free to translate along the main axis 52. A nut typically comprises a helical thread on an internal cylindrical surface, designed to match the geometry of the helical thread 70 on the outer cylindrical surface of the rotating output tube 60.

In the example, the nut 72 is connected to a window pane carrier which carries the window pane 32 between its first and second positions. In the example, the nut 72 is rigidly connected to the output bracket 54 disclosed above, but, as also disclosed above, a transmission mechanism can be provided between the nut 72 and the window pane 32. In the shown example, the nut 72 is a full nut extending 360 degrees around the main axis 52, which, in addition to converting a rotary motion to a linear motion, achieves a good guiding of the output bracket 54. However, the nut 72 could be a partial nut, extending along an angle less than 360 degrees around the main axis 52. For example, the partial nut can extend along an angle equal to or less than 180 degrees around the main axis 52, with an adequate mounting of the nut allowing the helical thread of the nut to remain in contact with the helical thread 70 of the rotating output tube 60.

To reduce friction forces, and thus to reduce the noise generated and the energy consumed to operate the motorized actuator 52, the nut and screw system can be designed as a ball screw which operates on rolling contact between the nut and the screw. For example, the nut may comprise roller balls recirculated along a helical groove on the inner cylindrical surface of the nut.

To prevent the rotation of the nut around the main axis A52, the nut 72 may have at least one radial extension which is received in a corresponding guiding slot that is fixed with respect to the window holding structure and which extends parallel to the main axis A52. In the shown embodiment, such a radial extension is formed by the output bracket 54, which is rigidly connected to the nut 72. The output bracket 54 extends through a slot 74 formed in a cylindrical housing 76 which surrounds the output rotating tube 60. The slot 74, and by consequence the housing 76, extends parallel to the main axis A52, and has a length along the main axis A52 that is superior or equal to a travel distance of the window pane 32 between its first and second positions. In the shown example, the housing 76 is a full housing that extends along 360 degrees around the main axis, exception made only for the slot 74. However, the housing 76 could be a partial housing extends along less than 360 degrees around the main axis A52. Also, a dedicated radial extension could be provided to prevent rotation of the nut around the main axis 52, for example by interaction with a corresponding slot, in addition to or as an alternative to the output bracket 54 being used for preventing rotation of the nut.

In the example, the housing 76 extends the full length of the static tubular pillar 56. The housing 76 is fixed to the window mounting structure, i.e. in the example fixed to the door 20. The housing 76 may fixed to the window mounting structure by its two axial extremities, for example one extremity being fixed to the first bracket 58 and the other extremity fixed to the second bracket 59.

In a variant of a leadscrew system, the output bracket 54 may be guided, independently from the rotating output tube 60, along a translation parallel to the main axis A2, and may comprise one or several radial finger(s) extending towards the main axis A2 interact with the helical thread 70 of the rotating output tube 60. For example, the helical thread 70 of the rotating output tube 60 may be in the form of a helical groove in the outer cylindrical surface of the rotating output tube 60, with the radial finger(s) being received in the groove.

The connector 66 may be, as in the shown embodiment, an iso-speed connector which connects the rotating central shaft 62 to the rotating output tube 60 so that they rotate together synchronously at the same speed and same direction around the main axis A52. In the shown example, the connector 66 is a rigid connector which rigidly connects the rotating central shaft 62 to the rotating output tube 60. For example, the connector 66 comprises a disc which has the main axis A52 as its axis of symmetry, and which is connected to the second extremity 622, here the upper extremity, of the rotating central shaft 62 so as to prevent relative rotation around the main axis. The disc 66 may comprise a central bore in which the second extremity 622 is connected, for example via a tight fit connection, via respective splines, via a key, via a radial pin or screw, and/or via a screwed connection, etc.... It is to be noted that the connection between the disc 66 and the rotating central shaft 62 may allow from some degree of movement between the disc 66 and the rotating central shaft 62 to compensate for dimension tolerances and misalignments, while still preventing relative rotation around the main axis A52. Alternatively, the connector 66 may be rigidly connected to the rotating central shaft 62, for example via a tight fit connection, a welded connection, a glued connection, etc.... As in the shown embodiment, the disc 66 may further comprise a circular groove in which the second extremity 602, here the upper extremity, of the rotating output tube 60 is connected, for example via a tight fit connection, via respective splines, via a key, via a radial pin or screw, and/or via a screwed connection, etc.... The connection between the disc 66 and the rotating output tube 60 may allow from some degree of movement between the disc 66 and the rotating output tube 60 to compensate for dimension tolerances and misalignments, while still preventing relative rotation around the main axis A52. Alternatively, the connector 66 may be rigidly connected to the rotating central shaft 62, for example via a tight fit connection, a welded connection, a glued connection, etc....

The disc 66 rotates with the rotating central shaft 62 and the rotating output tube 60. In the shown example, the disc 66 forms a plain bearing which is guided in rotation around the main axis A52 with respect to the upper bracket 59 connected to the window holding structure, i.e. in the example to the door 20. In the variant of FIG. 5, the disc 66 is guided in rotation around the main axis A52 with respect to the upper bracket 59 via a roller bearing 82.

As an alternative to the disc connector 66 described above, the connector may comprise a gear train connecting the rotating central shaft 62 to the rotating output tube 60. Such gear train may be located in place of the disc connector. Such gear train may provide a speed reduction or multiplication ratio between the speed of rotation of the rotating central shaft 62 and of the rotating output tube 60. Such gear train may retain or reverse the direction of rotation between the rotating central shaft 62 and the rotating output tube 60. Such gear train may allow an easier adaptation between the characteristics of the electric motor 64, such as its torque versus speed characteristic, and the desired output speed and force desired at the output bracket 54.

The disclosure further discloses the following examples of a motorized window pane actuation mechanism.

Example 1: A motorized window pane actuation mechanism (50) for displacing a mobile window pane (32) with respect to a window holding structure (20) between a first position and a second position along a window opening displacement (D), the mobile window pane (32) occupying, with respect to said window holding structure (20), a first pane zone (321) when in the first position and a second pane zone (322) when in the second position, the window pane actuation mechanism (50) comprising:
- a static tubular pillar (56) extending along a main axis (A52) parallel to the window opening displacement and on a side of the first pane zone (321) ;
- a rotating output tube (60) mounted coaxially around the static tubular pillar (56);
- a rotating central shaft (62) mounted coaxially inside the static tubular pillar (56);
- a rotary motor (64) mounted coaxially inside the static tubular pillar (56) and around the rotating central shaft (62) to cause the rotation of the rotating central shaft (62) with respect to the static tubular pillar (56);
- a connector (56) for transmitting a rotary motion of the rotating central shaft (62) to the rotating output tube (60);
- a rotary-to-linear motion converter (68) which is driven by the rotating output tube (60) and drives the displacement of the mobile window pane (32) along the window opening displacement.

Example 2: The motorized window pane actuation mechanism of Example 1, wherein the rotating output tube (60) extends along at least a portion of the static tubular pillar (56) and extends alongside the first pane zone (321).

Example 3: The motorized window pane actuation mechanism of any of Examples 1-2, wherein the connector (66) is an iso-speed connector which connects the rotating central shaft (62) to the rotating output tube (60).

Example 4 The motorized window pane actuation mechanism of any of Examples 1-3, wherein the connector is a rigid connector (66) which rigidly connects the rotating central shaft (62) to the rotating output tube (60).

Example 5: The motorized window pane actuation mechanism of any of Examples 1-2, wherein the connector comprises a gear train which connects the rotating central shaft (62) to the rotating output tube (60) with a speed reduction or multiplication ratio.

Example 6: The motorized window pane actuation mechanism of any of Examples 1-5, wherein the connector (66) is located proximate to one extremity (562) of the static tubular pillar (56).

Example 7: The motorized window pane actuation mechanism of any preceding Examples, wherein the rotary-to-linear motion converter comprises a helical thread (70) on an outer cylindrical surface of the rotating output tube (60).

Example 8 : The motorized window pane actuation mechanism of Example 7, wherein the helical thread Example on the outer cylindrical surface of the rotating output tube has a length along the main axis Example which is superior or equal to a travel distance of the window pane between its first and second positions.

Example 9: The motorized window pane actuation mechanism of any of Examples 7 or 8, wherein the rotary-to-linear motion converter (68) comprises a nut (72) which is screwed on the helical thread (70) and which is prevented from rotating around the main axis (A52) but free to translate along the main axis (A52), said nut (72) being connected to a window pane carrier (54) which carries the window pane (32) between its first and second positions.

Example 10: The motorized window pane actuation mechanism of Example 9, wherein the nut (72) has a radial extension (54) which is received in a guiding slot (74) that is fixed with respect to the window holding structure (20) and which extends parallel to the main axis (A52), and wherein the radial extension (54) prevents rotation of the nut (72) around the main axis (A52).

Example 11: The motorized window pane actuation mechanism of Example 10, wherein the guiding slot (74) is a slot in a cylindrical housing (76) of the window pane actuation mechanism (50).

Example 12: The motorized window pane actuation mechanism of any preceding Example, wherein the rotary motor (64) comprises an electric motor which has a stator (641) connected to an internal surface of the static tubular pillar (56), and a rotor (642) mounted on the rotating central shaft (62).

Example 13: The motorized window pane actuation mechanism of any preceding claim, wherein the connector is guided in rotation with respect to the window holding structure via a bearing.

Example 14: The motorized window pane actuation mechanism of any preceding Example, wherein the static tubular pillar (56) is statically affixed by a mounting extremity (561) to the window holding structure (20), wherein the static tubular pillar (562) has a free end extremity (562), opposite of the mounting extremity (561) along the main axis (A52), and wherein the connector (66) for transmitting a rotary motion of the rotating central shaft (62) to the rotating output tube (60) is located at the free end extremity (562) of the static tubular pillar (56).

Example 15. The motorized window pane actuation mechanism of any preceding Example, wherein the first position of the mobile window pane (32) is an opened window position, and wherein the second position of the mobile window pane (32) is a closed window position.

Example 16: The motorized window pane actuation mechanism of any preceding Example, wherein the window holding structure comprising, facing the first pane zone (321), a transparent panel (48).

Example 17: The motorized window pane actuation mechanism of any preceding Example, wherein the window holding structure (20) is a door of an automotive vehicle.

The disclosure further discloses a vehicle comprising the motorized window pane actuation mechanism (50) according to any preceding example.

The disclosure further discloses the following example of a vehicle comprising a door, wherein the door (20) has a lower portion (34), an upper portion (36), a window opening (38) in the upper portion (36), a mobile window pane (32) and a window pane actuation mechanism (50) for displacing the mobile window pane (32) with respect to the door (20) between a window open position and a window closed position along a window opening displacement, the mobile window pane (32) occupying, with respect to the door (20), a pane retraction zone (321) in the lower portion (34) of the door (20) when in the opened window position, and a second pane zone (322) corresponding to the window opening (38) when in the closed window position,
wherein the lower portion (34) of the door (20) comprises, facing the pane retraction zone (321), a transparent panel (48),
wherein the window pane actuation mechanism (50) comprises:
   - a static tubular pillar (56) extending along a main axis (A52) parallel to the window opening displacement and on a side of the pane retraction zone (321);
   - a rotating output tube (60) mounted coaxially around the static tubular pillar (56), extending alongside the pane retraction zone (321) and outside of a perimeter of the transparent panel (48);
   - a rotating central shaft (62) mounted coaxially inside the static tubular pillar (56);
   - a rotary motor (64) mounted coaxially inside the static tubular pillar (56) and around the rotating central shaft (62) to cause the rotation of the rotating central shaft with respect to static tubular pillar;
   - a connector (66) located proximate to an upper extremity (562) of the static tubular pillar (56) for transmitting a rotary motion of the rotating central shaft (62) to the rotating output tube (60);
   - a rotary-to-linear motion converter (68) which is driven by the rotating output tube (60) and drives the displacement of the mobile window pane (32) along the window opening displacement,
wherein the rotary-to-linear motion converter (68) comprises a helical thread (70) on an outer cylindrical surface of the rotating output tube (60), the helical thread (70) having a length along the main axis (A52) which is superior or equal to a travel distance of the window pane (32) between its opened window and closed window positions, and wherein the rotary-to-linear motion converter (66) comprises a nut (72) which is screwed on the helical thread (70) and which is prevented from rotating around the main axis (A52) but free to translate along the main axis (A52), said nut (72) being connected to a window pane carrier (54) which carries the window pane (32) between its window open and window closed positions.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A motorized window pane actuation mechanism (50) for displacing a mobile window pane (32) with respect to a window holding structure (20) between a first position and a second position along a window opening displacement (D), the mobile window pane (32) occupying, with respect to said window holding structure (20), a first pane zone (321) when in the first position and a second pane zone (322) when in the second position, the window pane actuation mechanism (50) comprising:
- a static tubular pillar (56) extending along a main axis (A52) parallel to the window opening displacement and on a side of the first pane zone (321) ;
- a rotating output tube (60) mounted coaxially around the static tubular pillar (56);
- a rotating central shaft (62) mounted coaxially inside the static tubular pillar (56);
- a rotary motor (64) mounted coaxially inside the static tubular pillar (56) and around the rotating central shaft (62) to cause the rotation of the rotating central shaft (62) with respect to the static tubular pillar (56);
- a connector (56) for transmitting a rotary motion of the rotating central shaft (62) to the rotating output tube (60);
- a rotary-to-linear motion converter (68) which is driven by the rotating output tube (60) and drives the displacement of the mobile window pane (32) along the window opening displacement.

2. The motorized window pane actuation mechanism of claim 1, wherein the rotating output tube (60) extends along at least a portion of the static tubular pillar (56) and extends alongside the first pane zone (321).

3. The motorized window pane actuation mechanism of any of claims 1-2, wherein the connector (66) is an iso-speed connector which connects the rotating central shaft (62) to the rotating output tube (60).

4. The motorized window pane actuation mechanism of any of claims 1-2, wherein the connector comprises a gear train which connects the rotating central shaft (62) to the rotating output tube (60) with a speed reduction or multiplication ratio.

5. The motorized window pane actuation mechanism of any preceding claims, wherein the rotary-to-linear motion converter comprises a helical thread (70) on an outer cylindrical surface of the rotating output tube (60).

6. The motorized window pane actuation mechanism of claim 5, wherein the helical thread (70) on the outer cylindrical surface of the rotating output tube (60) has a length along the main axis (A52) which is superior or equal to a travel distance of the window pane (32) between its first and second positions.

7. The motorized window pane actuation mechanism of any of claims 5 or 6, wherein the rotary-to-linear motion converter (68) comprises a nut (72) which is screwed on the helical thread (70) and which is prevented from rotating around the main axis (A52) but free to translate along the main axis (A52), said nut (72) being connected to a window pane carrier (54) which carries the window pane (32) between its first and second positions.

8. The motorized window pane actuation mechanism of claim 7, wherein the nut (72) has a radial extension (54) which is received in a guiding slot (74) that is fixed with respect to the window holding structure (20) and which extends parallel to the main axis (A52), and wherein the radial extension (54) prevents rotation of the nut (72) around the main axis (A52).

9. The motorized window pane actuation mechanism of any preceding claim, wherein the rotary motor (64) comprises an electric motor which has a stator (641) connected to an internal surface of the static tubular pillar (56), and a rotor (642) mounted on the rotating central shaft (62).

10. The motorized window pane actuation mechanism of any preceding claim, wherein the connector (66) is guided in rotation with respect to the window holding structure (20) via a bearing.

11. The motorized window pane actuation mechanism of any preceding claim, wherein the static tubular pillar (56) is statically affixed by a mounting extremity (561) to the window holding structure (20), wherein the static tubular pillar (562) has a free end extremity (562), opposite of the mounting extremity (561) along the main axis (A52), and wherein the connector (66) for transmitting a rotary motion of the rotating central shaft (62) to the rotating output tube (60) is located at the free end extremity (562) of the static tubular pillar (56).

12. The motorized window pane actuation mechanism of any preceding claim, wherein the window holding structure comprising, facing the first pane zone (321), a transparent panel (48).

13. The motorized window pane actuation mechanism of any preceding claim, wherein the window holding structure (20) is a door of an automotive vehicle.

14. A vehicle comprising the motorized window pane actuation mechanism (50) according to any preceding claim.

15. A vehicle comprising a door, wherein the door (20) has a lower portion (34), an upper portion (36), a window opening (38) in the upper portion (36), a mobile window pane (32) and a window pane actuation mechanism (50) for displacing the mobile window pane (32) with respect to the door (20) between a window open position and a window closed position along a window opening displacement, the mobile window pane (32) occupying, with respect to the door (20), a pane retraction zone (321) in the lower portion (34) of the door (20) when in the opened window position, and a second pane zone (322) corresponding to the window opening (38) when in the closed window position,
wherein the lower portion (34) of the door (20) comprises, facing the pane retraction zone (321), a transparent panel (48),
wherein the window pane actuation mechanism (50) comprises:
- a static tubular pillar (56) extending along a main axis (A52) parallel to the window opening displacement and on a side of the pane retraction zone (321);
- a rotating output tube (60) mounted coaxially around the static tubular pillar (56), extending alongside the pane retraction zone (321) and outside of a perimeter of the transparent panel (48);
- a rotating central shaft (62) mounted coaxially inside the static tubular pillar (56);
- a rotary motor (64) mounted coaxially inside the static tubular pillar (56) and around the rotating central shaft (62) to cause the rotation of the rotating central shaft with respect to static tubular pillar;
- a connector (66) located proximate to an upper extremity (562) of the static tubular pillar (56) for transmitting a rotary motion of the rotating central shaft (62) to the rotating output tube (60);
- a rotary-to-linear motion converter (68) which is driven by the rotating output tube (60) and drives the displacement of the mobile window pane (32) along the window opening displacement,
wherein the rotary-to-linear motion converter (68) comprises a helical thread (70) on an outer cylindrical surface of the rotating output tube (60), the helical thread (70) having a length along the main axis (A52) which is superior or equal to a travel distance of the window pane (32) between its opened window and closed window positions, and wherein the rotary-to-linear motion converter (66) comprises a nut (72) which is screwed on the helical thread (70) and which is prevented from rotating around the main axis (A52) but free to translate along the main axis (A52), said nut (72) being connected to a window pane carrier (54) which carries the window pane (32) between its window open and window closed positions.
